Europäisches Patentamt

European Patent Office

Office européen des brevets

(11) Publication number: 0 565 068 A2

# EUROPEAN PATENT APPLICATION

(21) Application number: 93105717.8

(22) Date of filing: 06.04.93

(51) Int. Cl.⁵: **G11B 7/085**

(30) Priority: **06.04.92 JP 83576/92**

(43) Date of publication of application:
**13.10.93 Bulletin 93/41**

(84) Designated Contracting States:
**DE FR GB**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Takizawa, Teruyuki**
**30-5-707, Mii-Minamimachi**
**Neyagawa-shi, Osaka-fu(JP)**
Inventor: **Goto, Yoshikazu**
**1-10-11, Nishikinya**
**Hirakata-shi, Osaka-fu(JP)**
Inventor: **Shimada, Toshiyuki**
**4-38-410, Sengoku-Nishimachi**
**Kadoma-shi, Osaka-fu(JP)**

(74) Representative: **Eisenführ, Speiser & Partner**
**Martinistrasse 24**
**D-28195 Bremen (DE)**

(54) **Mirror driving apparatus for optical disk drive.**

(57) A mirror driving apparatus which includes a rotary mirror (1), a support member for rotatably supporting the rotary mirror (1), a driving section for rotating the rotary mirror (1), a rotary electrode (17) mounted on the rotary mirror (1) or the support member, a fixed electrode (16) disposed close to the rotary electrode (17) through a small clearance generally in parallel relation therewith, a fixing section for fixing the support member and the fixed electrode (16), a detecting section for detecting electrostatic capacity or variation thereof between the rotary electrode (17) and the fixed electrode (16).

By detecting the displacing amount of the rotary mirror at high sensitivity as variation of capacity between the electrodes, electrical control is applied to the mechanical vibration system including the rotary mirror and the rotary mirror support member so as to suppress resonance value at the rotary mirror initial resonance frequency. Additionally, by superposing an additional high frequency component outside the control band onto the rotary mirror control signal, the rotary mirror is subjected to fine movement at all times, and thus, a dead band region (hysteresis characteristic) of the mechanical vibration system including the rotary mirror and its support member is reduced and uniformly maintained.

Fig. 5

## BACKGROUND OF THE INVENTION

### 1. Field of the Invention

The present invention generally relates to a driving arrangement and more particularly, to a driving apparatus of a mirror for subjecting light spot to tracking movement with respect to recording tracks on a disk medium.

Recently, in order to realize high speed access for an optical disk, reduction in weight of an optical head movable portion has been brought into a subject of a very important study.

As a means for solving the above subject, a system in which tracking control is effected by a rotary type mirror (galvano-mirror) provided at a stationary portion is considered to be most effective.

By the above system, it becomes possible to remove the tracking driving device conventionally mounted on the optical head movable portion, thereby to reduce the weight of the optical head movable portion to a large extent.

With respect to the above, there have conventionally been proposed arrangement as follows.

(1) U.S.P. No. 4,330,880 to Ate Van Dijk (May 18, 1982) entitled "Apparatus for optically reading a disc-shaped record carrier in particular for rapidly locating a desired program section" discloses that a high speed seeking can be realized by the tracking employing a galvano-mirror.

(2) U.S.P. No. 4,423,496 to Willem G. Opheij et al. (Dec. 27, 1983) entitled "Apparatus for reading and/or writing an optically readable information structure" discloses that, by detecting the rotating amount of a mirror through use of a photo-reflector for a position control loop of light spot based on a galvano-mirror, and using this as a correction signal for actuating the position control loop, more stable tracking control servo may be realized.

Additionally, since the accuracy for the control as referred to above depends on the detection accuracy of the mirror rotating amount, there have also conventionally been proposed various mirror displacing amount detecting apparatuses employing light, for example, as follows.

(1) U.S.P. No. 4,466,088 to Paul M. Trethewey et al. (Aug. 14, 1984) entitled "Galvo position sensor for track selection in optical data disk system" discloses an arrangement in which, by newly providing a second reflecting mirror auxiliarily at the reflecting face side of a galvano-mirror so as to reflect monitor light in the order of the second reflecting mirror, reflecting face of the galvano-mirror, and the second reflecting mirror, the variation of the returning light amount is detected at higher sensitivity.

Subsequently, one example of conventional mirror driving apparatuses will be explained with reference to drawings. Figs. 8(a), 8(b) and 8(c) are sectional diagrams showing construction of a conventional mirror driving apparatus. Figs. 9(a) and 9-(b) are exploded perspective views of the conventional mirror driving apparatus, and Figs. 10(a) and 10(b) are diagrams for explaining functioning of the conventional mirror driving apparatus.

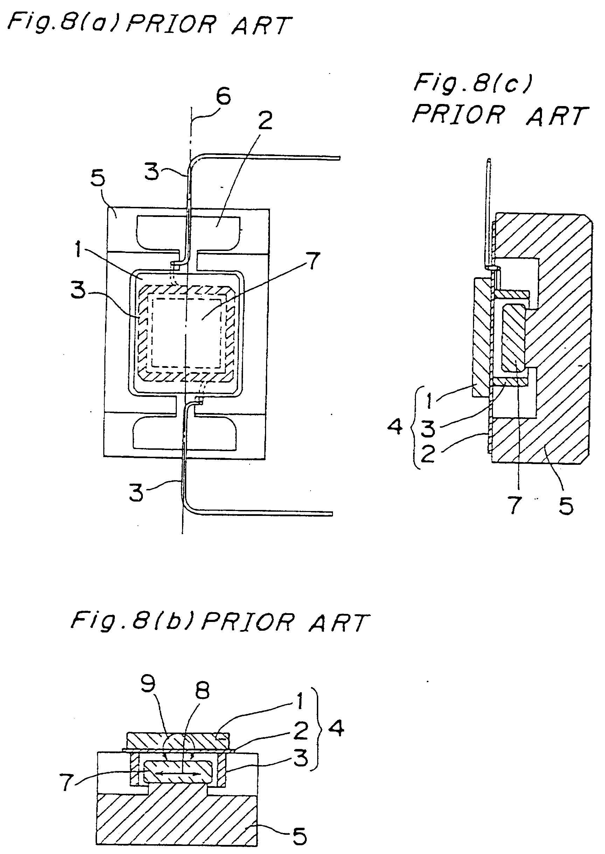

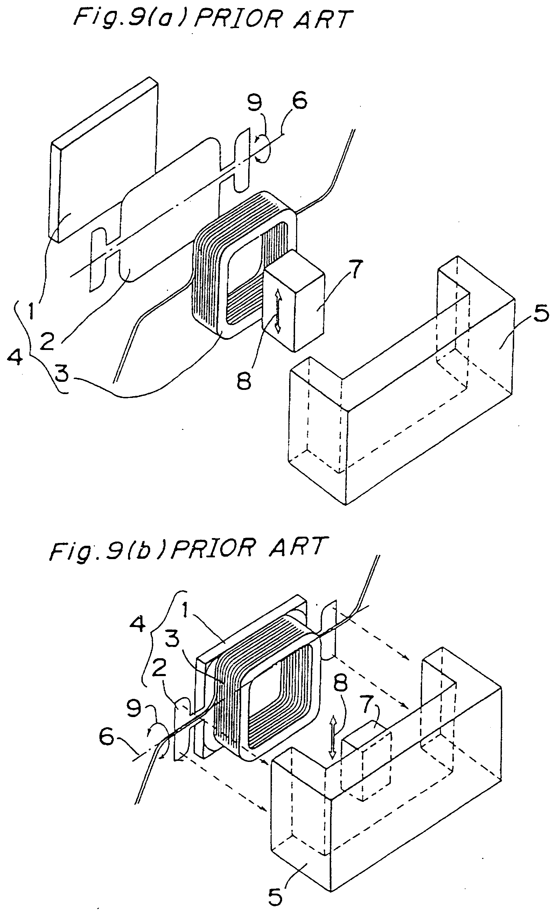

In Figs. 8(a), 8(b), 8(c), and Figs. 9(a), 9(b), the known mirror driving apparatus generally includes a rotary mirror 1, a plate or leaf spring 2 to one surface of which the rotary mirror 1 is bonded for fixing, and a driving coil 3 which is bonded for fixing to the other surface of the plate spring 2 attached with said rotary mirror 1, with a winding axis of the coil 3 directed vertically, so as to constitute a rotary section 4 by said rotary mirror 1, plate spring 2 and driving coil 3, a housing 5 to which opposite end portions of the plate spring 2 disposed on a rotary axis 6 of the rotary section 4 are bonded for fixing so that the rotary section 4 may be rotated in directions indicated by arrows 9, and a permanent magnet 7 fixed in the housing 5 so as to be closely disposed within an opening of the driving coil 3, and magnetized perpendicularly to the rotary axis 6 of the rotary section 4 and in a magnetizing direction 8 parallel to a mirror surface of the rotary mirror 1.

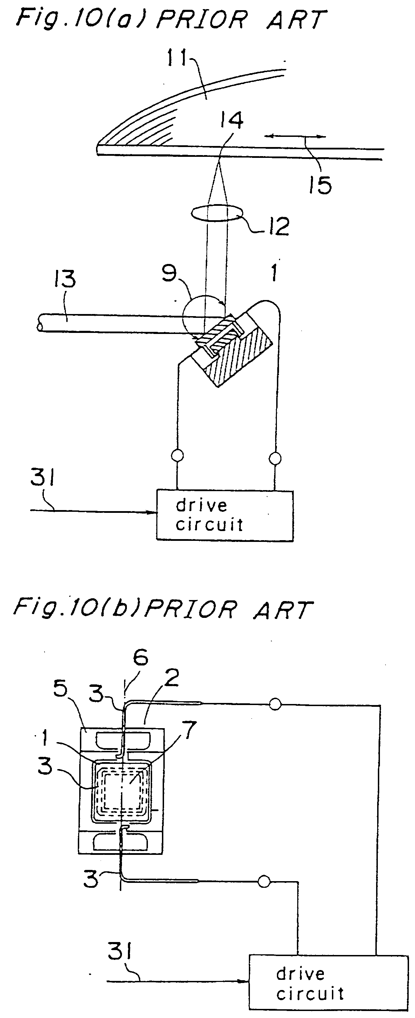

In Figs. 10(a) and 10(b), a tracking control signal 31 is applied to a driving circuit 10 which drives a driving coil 3 at a current value proportional to a voltage value of the tracking control signal 31. There is provided an objective lens 12 for forming light spot 14 on the track of an optical disk 11 by laser light 13 reflected by a rotary mirror 1 with respect to a tracking direction 15. The driving circuit 10 may be of a voltage-current converter which drives the driving coil 3 by current proportional to the tracking control signal, and therefore, detailed description thereof is abbreviated here by brevity.

With respect to the mirror driving apparatus having constructions as described so far, functioning thereof will be described hereinafter.

In the first place, for causing light spot 14 to follow the tracks on the optical disk 11, the tracking control signal 31 is applied to the driving circuit 10 of the mirror driving apparatus as a target driving signal of the tracking mirror driving apparatus. Subsequently, driving signal corresponding to the tracking control signal 31 is passed through the driving coil 3, which is subjected to electromagnetic force corresponding to the tracking control signal 31 from the permanent magnet 7. As a result, the rotary section 4 constituted by the rotary mirror 1, the plate spring 2, and the driving coil 3 is rotated and controlled in the rotating direction 9 about the rotary axis 6. By the above function, alternation of angle for the reflecting light of laser light 13 projected onto the rotary mirror 1 is effected, and consequently, incident angle of the laser light 13 into the objective lens 12 is altered, thus making it possible to displace the light spot 14 in the tracking direction 15 of the optical disk 11. (Fig. 10(a)).

By the above function, tracking control in the optical disk apparatus can be realized.

In the conventional mirror diving apparatus, however, there has been such a problem that, since the construction is limited only to a mechanical vibrating system in which the rotary section 4 is supported at opposite ends of the plate spring 2, resonance value at an initial resonance frequency for the rotary section 4 can not be suppressed, and thus, stable tracking control system can not be constituted.

Meanwhile, in the conventional arrangements, a practice for suppressing resonance value at the initial resonance frequency is often employed by adding a mechanical damper structure, for example, by sticking damper members to the rotary portion of the plate spring, etc. Although the resonance value may be suppressed by such practice, there is such a drawback that, restoring property in the rotating direction 9 for the rotary section 4 is rapidly reduced, with a consequent increase of a dead band region (hysteresis characteristic) of the rotary mirror 1, thus making it impossible to maintain continuous stability of the initial position for the rotary mirror 1.

## 2. Description of the Prior Art

## SUMMARY OF THE INVENTION

Accordingly, an essential object of the present invention is to provide a mirror driving apparatus which is capable of suppressing a resonance value at an initial resonance frequency occurring in a rotating direction of a rotary mirror, without increasing a dead band region (hysteresis characteristic) of the rotary mirror.

Another object of the present invention is to provide a mirror driving device of the above described type which is simple in construction and stable in functioning at high reliability, and can be readily manufactured at low cost.

In accomplishing these and other objects, according to one aspect of the present invention, there is provided a mirror driving apparatus which includes a rotary mirror, a support member for rotatably supporting the rotary mirror, a driving section for rotating said rotary mirror, a rotary electrode mounted on said rotary mirror or said support member, a fixed electrode disposed close to the rotary electrode through a small clearance generally in parallel relation therewith, a fixing section for fixing said mirror support member and said fixed electrode, and a detecting section for detecting electrostatic capacity between said rotary electrode and said fixed electrode.

In another aspect of the present invention, the mirror driving apparatus includes a rotary mirror, a support member for rotatably supporting the rotary mirror, a driving section for rotating said rotary mirror, a driving electrical circuit for driving the driving section, and an adder for superposing an additional high frequency component of a specific frequency onto a rotary mirror driving control signal applied to the driving electrical circuit.

By the arrangement of the present invention, as described above, through employment of the rotary electrode displace together with the rotary mirror and the fixed electrode fixed at the outer side so as to confront the rotary electrode for detecting electrostatic capacity between the rotary electrode and the fixed electrode, the amount of rotation of the rotary mirror can be detected at high sensitivity, and moreover, it becomes possible to apply an electrical feedback control to the rotary mirror driving section by employing the detection signal. Moreover, by applying the speed feedback control to the mechanical control objects in general, it is known that the resonance value of the mechanical control object may be suppressed. Accordingly, by applying the speed feedback control to the rotary mirror which is the mechanical control object, the resonance value at the initial resonance frequency occurring in the rotating direction of the rotary mirror can be electrically suppressed, while owing to the construction that the rotary section is supported at opposite ends of the plate spring, it becomes possible to minimize the dead band region (hysteresis characteristic) of the rotary mirror. Furthermore, by forming one electrode to be a charging film (i.e. erectret film), the variation of the electrostatic capacity between the rotary electrode and the fixed electrode with respect to the rotating amount of the rotary mirror may be increased, whereby an electrostatic capacity detecting section at high sensitivity can be provided. Moreover, owing to the electrostatic capacity detection system which detects the mirror rotating amount by the variation of the electrostatic capacity, disturbance factors such as temperature drifts, noises, etc. are reduced, and as compared with other sensors (e.g. an optical sensor), the apparatus can be provided in a compact size at lower cost. Furthermore, by superposing an additional high frequency component outside the ordinary rotary mirror control band region, on the rotary mirror driving control signal, it is made possible to finely move the rotary mirror at all times, and thus, non-linear characteristics such as stationary friction, etc. can be eliminated. Consequently, the dead band region (hysteresis characteristic) of the mechanical vibrating system constituted by the rotary mirror and the mirror support member can be further reduced, and the initial setting angle of the rotary mirror can be accurately and stably maintained at all times.

**BRIEF DESCRIPTION OF THE DRAWINGS**

These and other objects and features of the present invention will become apparent from the following description taken in conjunction with the preferred embodiment thereof with reference to the accompanying drawings in which;

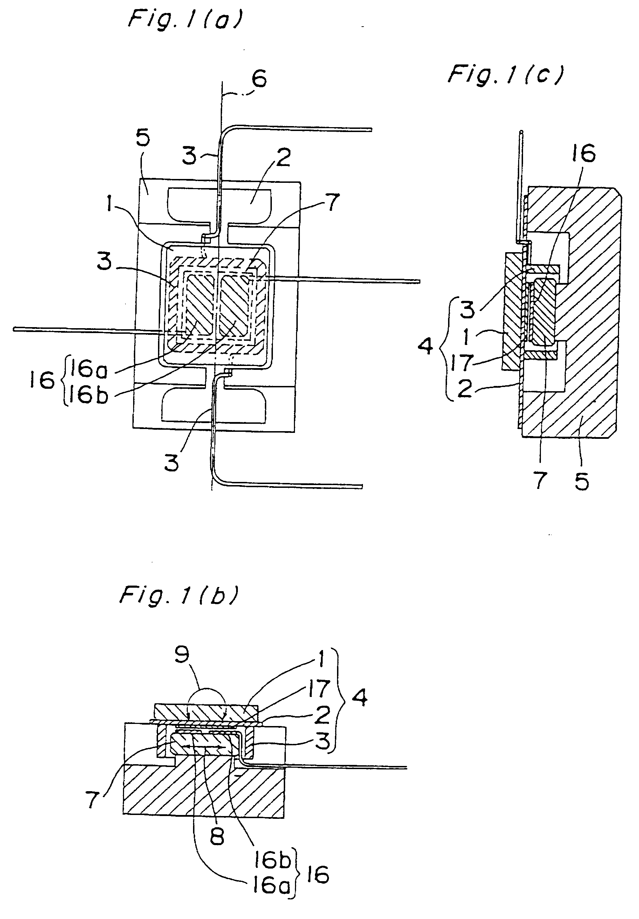

Figs. 1(a), 1(b) and 1(c) are sectional diagrams schematically showing constructions of a mirror driving apparatus according to one preferred embodiment of the present invention,

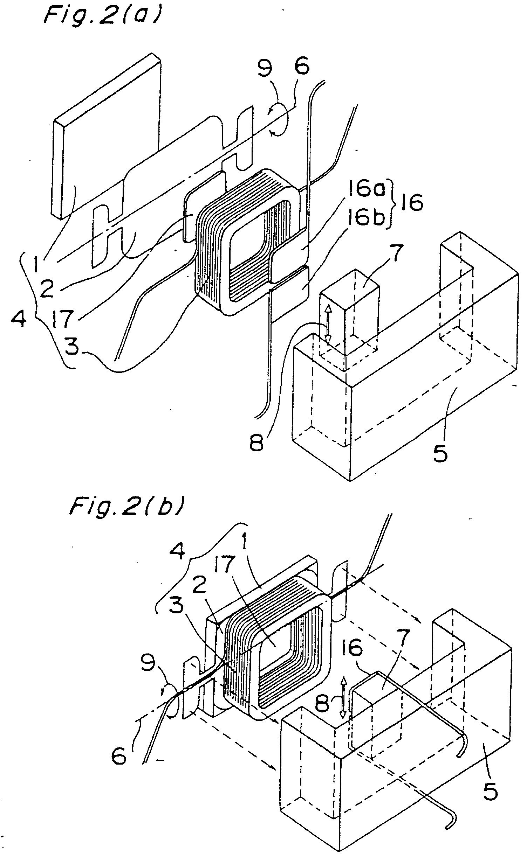

Figs. 2(a) and 2(b) are exploded perspective views of the mirror driving apparatus according to the present invention,

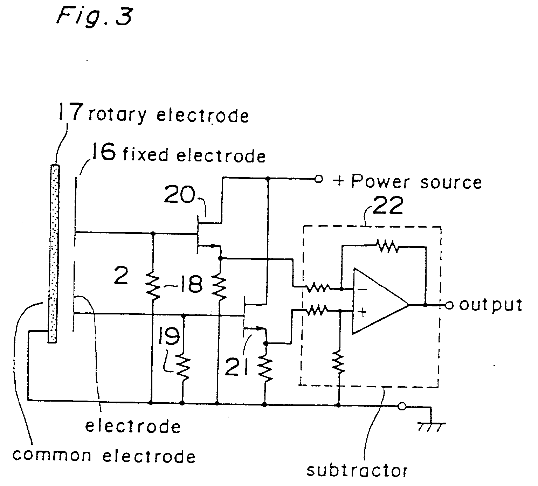

Fig. 3 is an electrical diagram showing a first example of a mirror-position detecting circuit,

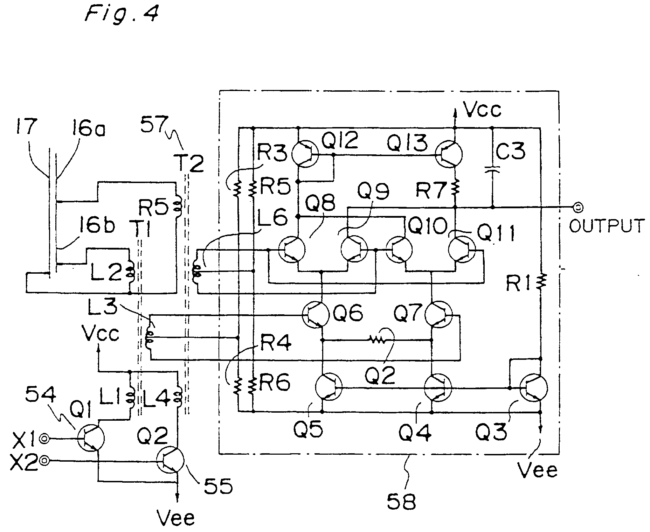

Fig. 4 is an electrical diagram showing a second example of a mirror-position detecting circuit,

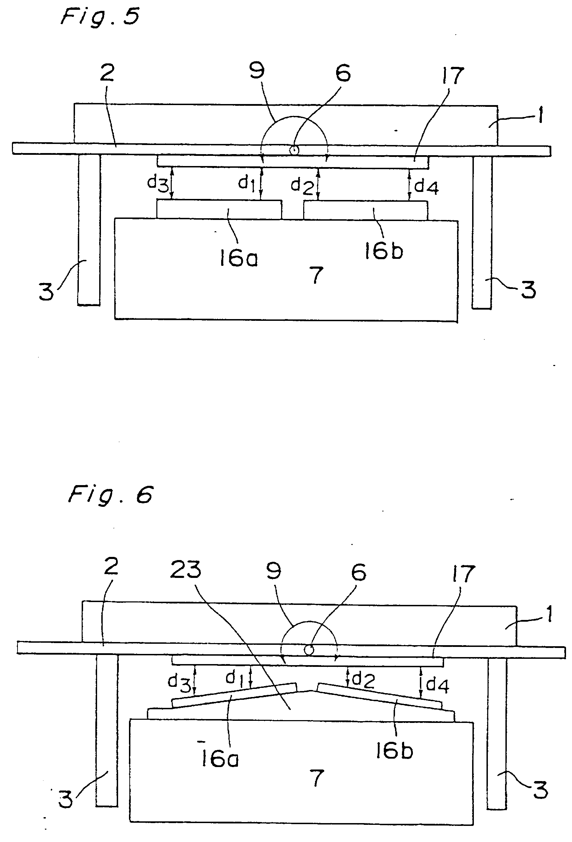

Fig. 5 is a first detailed diagram of electrodes,

Fig. 6 is a second detailed diagram of electrodes,

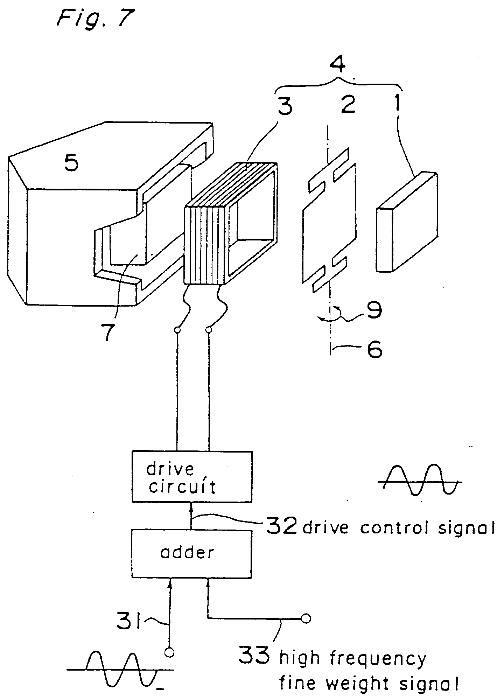

Fig. 7 is an exploded perspective diagram showing a mirror driving apparats according to a second embodiment of the present invention,

Figs. 8(a) to 8(c) are sectional diagrams similar to Figs. 1(a), 1(b) and 1(c), which particularly show a conventional mirror driving apparatus,

Figs. 9(a) and 9(b) are exploded perspective views of the conventional mirror driving apparatus, and

Figs. 10(a) and 10(b) are diagrams for explaining functions of the conventional mirror driving apparatus.

**DETAILED DESCRIPTION OF THE INVENTION**

Before the description of the present invention proceed, it is to be noted that like parts are designated by like reference numerals throughout the accompanying drawings.

Referring now to the drawings, there is shown in Figs. 1(a), 1(b), 1(c), and Figs. 2(a) and 2(b), a mirror driving apparatus according to one preferred embodiment of the present invention, which generally includes a rotary mirror 1, leaf spring or a plate spring 2 to one surface of which the rotary mirror 1 is bonded for fixing, and a driving coil 3 which is bonded for fixing to the other surface of the plate spring 2 attached with said rotary mirror 1, with a winding axis of the coil 3 directed vertically, so as to constitute a rotary section 4, i.e., rotatable parts by said rotary mirror 1, plate spring 2, driving coil 3, and a rotary electrode 17, which is disposed in an opening formed in the driving coil 3 and conducted to the plate spring 2 for fixing. A housing 5 to which opposite end portions of the plate spring 2 disposed on a rotary or rotational axis 6 of the rotary section 4 are bonded for fixing so that the rotary section 4 may be rotated in a directions indicated by arrow 9, and a permanent magnet 7 fixed in the housing 5 so as to be closely disposed within an opening of the driving coil 3, and magnetized perpendicularly to the rotary axis 6 of the rotary section 4 and in a direction 8 of magnetic pole parallel to a mirror surface of the rotary mirror 1. A set of fixed electrodes 16 are disposed generally in parallel relation with and close to each other through a very small space with respect to the rotary electrode 17 within the opening of the driving coil 3, and insulated with respect to the permanent magnet 7 and disposed to be perpendicular to the rotary axis 6 of the rotary section 4 so as to be divided into two portions in a direction parallel to a mirror surface of the rotary mirror 1.

In Fig. 3 showing one example of the detecting section for the mirror driving device according to the present invention, the electrodes 1 and 2 for the fixed electrode 16 are coupled to + power source and a subtractor 22 constituted by four resistors and one operational amplifier through field effect transistors 20 and 21 (FET), and also, to a line from the rotary electrode 17 as a common electrode, to the ground through resistors 18, 19, etc. as illustrated, and thus, the detecting circuit for outputting the detecting signal by detecting variation of electrostatic capacity between the stationary electrode 16 and the rotary electrode 17 is constituted.

Still referring to Figs. 1(a), 1(b), 1(c), Figs. 2(a) and 2(b), and Fig. 3, functioning of the mirror driving apparatus constructed as above will be explained hereinbelow.

In the first place, in Figs. 1(a) to 1(c) showing the basic construction of the mirror driving apparatus according to the first embodiment of the present invention excluding the detecting section, the permanent magnet 7 is first bonded to the housing 5 fixed on an optical disc chassis (not shown), and the fixed electrode 16 having two electrodes 16a and 16b made of conductive material and bonded on an insulative plate is bonded on one side face of the permanent magnet 7. In the drawing, respective electrode lead-out lines are shown as the electrodes 1 and 2. The rotary mirror 1 is bonded to the plate spring 2, and on the other face of the plate spring 2, the rotary electrode 17 which is a charging film (e.g. an electret film) and the coil 3 are bonded. The connection of this rotary electrode 17 is effected through the plate spring 2 which is a conductor. The electrode lead-out line thereof is shown as the common electrode in the similar manner as in the fixed electrode 16. Further, the plate spring 2 is fixed to the housing 5. Accordingly, using electromagnetic force produced in the driving section constituted by the permanent magnet 7 and the coil 3 as a driving force upon energization of the coil 3, the rotary mirror 1 is rotated in the rotating direction indicated by the arrows 9 about the rotary axis 6, and the rotary electrode 17 is also rotated together with the above rotation.

In one example of the electrode construction in Fig. 5, the fixed electrode 16 is divided into the electrodes 1 and 2 along the rotational center of the plate spring 2, on a base material.

When the rotary mirror 1 is rotated in the rotating direction 9, since the pair of fixed electrodes (i.e., the fixed electrodes 16a and 16b) are so disposed as to be divided into two portions in a direction perpendicular with respect to the rotary axis 6 of the rotary section 4, and also parallel to the mirror surface of the rotary mirror 1, a distance d1 between the rotary electrode 17 and the fixed electrode 16a, and a distance d2 between the rotary electrode 17 and the fixed electrode 16b are varied inversely. Accordingly, since the electrostatic capacity between the electrodes varies inversely with the distance between the electrodes, by the above division, the electrostatic capacity C1 between the rotary electrode 17 and the fixed electrode 16a, and the electrostatic capacity C2 between the rotary electrode 17 and the fixed electrode 16b are also varied inversely each other. In Fig. 5, the width of the rotary electrode 17 is about 8mm, areas for the electrodes 16a and 16b are each about 32 mm$^2$, distance d1 and d2 between electrodes during non-functioning period of the rotary section 4 are approximately 150 microns, and thus, the electrostatic capacities C1 and C2 are about 1.8PF. Meanwhile, since the maximum rotational range of the rotary mirror 4 may be generally at 0.1 degree based on the optical head specification, the electrostatic capacities C1 and C2 during the functioning vary by about ± 2.3%.

In Fig. 3 showing a circuit construction of the detecting section, since electrical charge of about 200 volts is preliminarily fixed to the rotary electrode 17 which is of the charging film (e.g. the electret film), charge according to said fixed charge and opposite in polarity is excited in the fixed electrodes 16a and 16b provided to confront said rotary electrode 17. Due to the fact that the rotation of the rotary electrode 17 gives rise to variation in the electrostatic capacities C1 and C2, the charge excited in the fixed electrodes 16a and 16b is to move through the resistors 18 and 19, and thus, voltage variations corresponding to the variations of the electrostatic capacities C1 and C2 appear across the resistors 18 and 19 respectively. The field effect transistors 20 and 21 function as voltage followers of high input resistance and take out such voltages across the resistors while the subtractor 22 outputs the difference therebetween.

As described so far, according to the above embodiment of the present invention, by providing the rotary electrode to be displaced together with the rotary mirror, the fixed electrode fixed outside so as to confront said rotary electrode, and the detecting section for detecting the variation in the electrostatic capacity produced between said rotary electrode and said fixed electrode, the amount of displacement of the rotary mirror may be detected at high sensitivity.

It is to be noted here that, since the driving method of the rotary section 4 is generally similar to that of the conventional mirror driving apparatus referred to earlier with reference to Figs. 10(a) and 10(b), etc., detailed description thereof is abbreviated here for brevity of explanation.

Reference is made to Fig. 4 showing a circuit construction of a detecting section according to a second embodiment of the present invention.

In the detecting section in Fig. 4, the fixed electrodes 16a and 16b and the rotary electrode 17 are coupled with transistors 54 and 55 as the amplifiers for driving coils L1 and L2 by bi-phase input signals X1 and X2 different in phase by 90° at the specific same frequency, a transformer T1 in which the primary coil L1, resonance coil L2 and a secondary coil L3 are magnetically coupled, and a transformer T2 at 57 in which the primary coil L4, resonance coil L5, and secondary coil L6 are also magnetically coupled, which are further coupled with a multiplier 58 surrounded by a chain line and including transistors Q1 to Q13, resistors R1 to R7, and capacitor C3 connected to each other as illustrated, and leading to a positive power supply Vcc and a negative power supply Vee.

In the first place, high frequency current is caused to flow to the primary side coils L1 and L4 by the amplifiers 54 and 55. The resonance coils L2 and L5 respectively constitute resonance circuits by the electrostatic capacity C1 between the fixed electrode 16a and the rotary electrode 17, and the electrostatic capacity C2 between the fixed electrode 16b and the rotary electrode 17. Here, the frequency for the specific high frequency signal is set in the vicinity of said resonance frequency. According to the above construction, in the functioning of the transformers T1 and T2, the phase characteristic for the transfer characteristic from the primary coils L1 and L2 to the secondary coils L3 and L4 is to vary by the resonance circuit of the resonance coil L3 and the electrostatic capacity C1, and the resonance circuit of the resonance coil 4 and the electrostatic capacity C2. Since the electrostatic capacities C1 and C2 are inversely varied by the rotation of the rotary mirror as referred to earlier, the phase of the high frequency signal excited in the secondary coils L3 and L6 is to be varied by the variation of the electrostatic capacity due to the rotation of the rotary mirror.

With respect to the functions of the multiplier 58, the transistors Q3, Q4 and Q5 constitute a current mirror circuit, and bias current for the transistors Q4 and Q5 is determined by the transistor Q3 and the resistor R1. The bias current for the transistors Q4 and Q5 is divided into currents flowing through the transistors Q7 and Q6 through the resistor R2, by the high frequency signal excited in the secondary coil L3. Here, the resistors R3 and R4 are intended to apply proper bias voltage to the transistors Q6 and Q7. The divided current as referred to above is further divided into the transistors Q10 and Q11 or Q8 and Q9 by the high frequency signal excited across the secondary coil L6. The transistors Q12 and Q13 constitute a current mirror circuit, and the added value of the currents for the transistors Q8 and Q10 is to flow through the resistor R7. Further, as a result that the value of the currents of the transistors Q9 and Q11 is also caused to flow through the resistor R7, voltage proportional to the current value obtained by subtracting the current of the transistors Q9 and Q11 from the current of the transistors Q8 and Q10 is to be produced as the output. Moreover, by the capacity C1 connected to R7, this current value is outputted as that subjected to low pass filtering.

On the assumption that t represents time, $\omega$ denotes angular frequency of the high frequency signal described earlier, $\phi1$ and $\phi2$ are phase components of high frequency signals respectively excited in the secondary coils L3 and L6, the high frequency signal excited in the secondary coil L3 is denoted by sin $(\omega t + \phi1)$ in approximation, and the high frequency signal exited in the secondary coil L6 is also represented by sin $(\omega t + \phi2)$ by taking into consideration that the phase is different by 90°, the output of the multiplier 58 will be represented as:

$$\sin(\omega t + \phi1) \cdot \cos(\omega t + \phi2) = \tfrac{1}{2}(\sin(\phi1 - \phi2) + \sin(2\omega t + \phi1 + \phi2)$$

By the effect of C1 as referred to earlier, the second term at the right side of the above equation which is the high frequency component of the output of the multiplier 58 is eliminated, and only the first term which is the low frequency component is outputted. Accordingly, the multiplier 58 is to output, in approximation, the phase difference of the high frequency signals excited by the secondary coils L3 and L6.

By the above series of operation, when the electrostatic capacity is varied by the rotation of the rotary mirror, phase variation takes place for the secondary coils L3 and L6, and the phase difference thereof is further detected for output.

As described above, by the arrangement of Fig. 4 also, it is possible to detect the electrostatic capacity variation by the rotation of the rotary mirror. In Fig. 4, the difference thereof from Fig. 3 is that the detection of the electrostatic capacities C1 and C2 is adapted to be effected based on A.C.current. In the construction of Fig. 3, it is difficult from the circuit construction, to detect variation of electrostatic capacity at a very low frequency component in the vicinity of D. C. region, but in the system for detecting the electrostatic capacity in terms of A. C as in Fig. 4, the electrostatic capacity substantially similar to D.C. can be detected, and thus, detecting sensitivity at the low frequency region may be improved to a large extent.

As is readily seen from the foregoing description, the detecting sensitivity by the rotation of the plate spring is determined, by the variation ratio of the electrostatic capacity, i.e. by the ratio of the electrostatic capacity during non-rotational period, to the varied capacity during rotational period. In other words, in Fig. 5, in the distances between the rotary electrode 17 and the fixed electrodes 16a and 16b, the detection sensitivity is considered to be determined by the ratio of rotational functioning period to the non-rotational period. More specifically, in Fig. 5, it is clear that variation of the distances d1 and d2 near the rotary axis 6 becomes smaller than that at the outer side of the electrode during the rotational functioning period, with a consequent lowering of efficiency.

In a second embodiment of the arrangement for the rotary electrode 17 and the fixed electrodes 16a and 16b as shown in Fig. 6, the fixed electrodes 16a and 16b divided into two portions are fixedly disposed on the magnet 7 through an insulative member disposed to be generally, radially arranged with respect to the center 6 of the rotational axis. By such electrode construction, it is possible to increase the detecting sensitivity.

Referring to Fig. 7, there is shown a mirror driving apparatus according to a second embodiment of the present invention.

In Fig. 7, the mechanical construction of the mirror driving apparatus is generally similar to that of the conventional arrangement described earlier with reference to Figs. 8(a) to 9(b), detailed description thereof is abbreviated here for brevity, with like parts being designated by like reference numerals. An additional high frequency component outside the control band of the rotary mirror 1 is represented by Numeral 33, a tracking control signal is represented by Numeral 31, an adder is denoted by Numeral 34, a driving circuit is shown by Numeral 10, and an added driving control signal is shown by Numeral 32.

The functioning of the mirror driving apparatus having the above construction will be explained hereinafter with reference to Figs. 1(a) to 1(b).

In the first place, the tracking control signal 31 and the additional high frequency component 33 are added by the adder 34, and the driving control signal 32 thus added by the adder 34 is passed through the driving circuit 10 so that the current corresponding to the driving control signal 32 is passed through the driving coil 3 connected therewith. As a result, the driving coil 3 is subjected to electro-magnetic force corresponding to the driving control signal 32 from the permanent magnet 7, and the rotary section 4 constituted by the driving coil 3, plate spring 2, and the rotary mirror 1 is rotated in the rotating direction 9 about the rotary axis 6. By the above function, it becomes possible to effect the reflected light displacement control of the laser light (not shown) irradiated onto the rotary mirror 1, and thus, tracking control in the optical disk apparatus is realized. Moreover, since the driving control signal 32 is superposed with the additional high frequency component 33 outside the tracking control band of the rotary mirror 1, the rotary mirror 1 is finely moved at the high frequency outside the control band at all times, and thus, non-linear characteristic such as stationary friction, etc. may be eliminated. Consequently, the dead band region (hysteresis characteristic) of the mechanical vibrating system constituted by the rotary mirror and the mirror support member is further reduced, and the initial setting angle of the rotary mirror 1 can be stably continued at high accuracy. Meanwhile, since the rotary mirror 1 is finely moving at the high frequency outside the tracking control region, there is no obstruction to the original tracking control.

It is needless to say that, by combining the first and second embodiments, two problems necessary for the tracking control actuator, i.e., reduction of the dead band region (hysteresis characteristic) of the rotary mirror, and suppression of the resonance value at the initial resonance frequency, can be simultaneously solved.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

## Claims

1. A mirror driving apparatus which comprises a rotary mirror (1) a support member for rotatably supporting the rotary mirror (1), a driving section for rotating said rotary mirror (1), a rotary electrode (17) mounted on said rotary mirror (1) or said support member, a fixed electrode (16) disposed close to the rotary electrode (17) through a small clearance generally in parallel relation therewith, a fixing section for fixing said support member and said fixed electrode (16) and a detecting section for detecting electrostatic capacity or variation thereof between said rotary electrode (17) and said fixed electrode (16).

2. A mirror driving apparatus a claimed in Claim 1, wherein one of said rotary electrode (17) and said fixed electrode (16) is divided into a plurality of portions along a rotational axis direction of said rotary mirror and the detecting section is provided for detecting differential component or its variation amount of at least two electrostatic capacities constituted thereby.

3. A mirror driving apparatus as claimed in Claim 1, wherein said rotary electrode (17) or said fixed electrode (16) includes a charging film, said detecting section being arranged to detect variation of charge amount excited in said fixed electrode (16) or said rotary electrode (17) by said charging film according to electrostatic capacity between both of said electrodes.

4. A mirror driving apparatus as claimed in Claim 1, wherein one or both of said fixed electrode (16) and said rotary electrode (17) are divided, and said fixed electrode (16) is so disposed as to be closest to said rotary electrode (17) with respect to a certain predetermined amount of rotation of said rotary mirror (1).

5. A mirror driving apparatus as claimed in Claim 1, wherein the support member of said rotary mirror (1) also serves as said rotary electrode.

6. A mirror driving apparatus as claimed in Claim 1, wherein a magnetic circuit constituting said driving section also serves as said fixed electrode (16) or said rotary electrode (17).

7. A mirror driving apparatus as claimed in Claim 1, wherein said driving section includes a driving coil (3) and a magnetic circuit (7).

8. A mirror driving apparatus as claimed in Claim 1, wherein the support member of said rotary mirror (1) is constituted by rotary support by a plate spring (2), and a stationary center position of said rotary mirror (1) is given by returning force of the plate spring (2).

9. A mirror driving apparatus which comprises a rotary member (1), a support member for rotatably supporting the rotary mirror (1), a driving section for rotating said rotary mirror (1), and a control section for superposing an additional high frequency component of a specific frequency on a servo signal to be applied to said driving section.

10. A mirror driving apparatus as claimed in Claim 9, wherein the frequency of said additional high frequency component is a frequency outside a tracking control band region for said rotary mirror (1).

11. A mirror driving apparatus as claimed in Claim 9, wherein said driving section includes a driving coil (3) and a magnetic circuit (7).

12. A mirror driving apparatus as claimed in Claim 9, wherein the support member of said rotary mirror (1) is constituted by rotary support by a plate spring (2), and a stationary center position of said rotary mirror (1) is given by returning force of the plate spring.

EP 0 565 068 A2

Fig. 1(a)

Fig. 1(c)

Fig. 1(b)

9

Fig.2(a)

Fig.2(b)

## Fig. 3

17 rotary electrode

16 fixed electrode

+ Power source

20

22

2

18

19

21

output

electrode

common electrode

subtractor

Fig.4

Fig. 5

Fig. 6

## Fig. 7

drive
circuit

32 drive control signal

adder

31

33 high frequency
fine weight signal

EP 0 565 068 A2

Fig.8(a) PRIOR ART

Fig.8(c)
PRIOR ART

Fig.8(b) PRIOR ART

Fig.9(a) PRIOR ART

Fig.9(b) PRIOR ART

## Fig.10(a) PRIOR ART

## Fig.10(b) PRIOR ART